# EUROPEAN PATENT APPLICATION

(11) **EP 1 369 803 A2**
(43) Date of publication of application: **10.12.2003**
(21) Application number: 03253462.0
(22) Date of filing: 03.06.2003
(51) Int. Cl.: G06F 17/60

(54) **Point management apparatus, point management system, point management method, and point management program**

(30) Priority: 07.06.2002 JP 2002167697
(71) Applicant: FUJITSU LIMITED, Kawasaki-shi, Kanagawa 211-8588 (JP)
(72) Inventor: Ho, Denny Kwan Choi, c/o Fujitsu Limited, Kawasaki-shi, Kanagawa 211-8588 (JP)
(74) Representative: Hitching, Peter Matthew

(57) **Abstract**

In a store server a shopping contribution rate is analyzed for every item and every customer by making use of a shopping record of customer. When a customer purchases an item using remaining points, a purchasing point required for purchasing the same item is reduced based on the purchasing point discount rate which has been preset depending on a shopping contribution rate.

## Description

This application claims the benefit of Japanese Patent Application No. 2002-167697, filed June 7, 2002, in the Japanese Patent Office, the disclosure of which is incorporated herein by reference.

The present invention relates to a store server used for management of transaction information of customers and management of points of customers, and, more particularly, to a point-of-sale (POS) system comprising a POS terminal processing transactions of customers and Internet shopping or the like.

In recent years, a point system has been introduced to supermarkets or specialty shops. In this point system, a point is given to a customer depending on the contents of a transaction of the customer executed at a POS terminal in a store. Such point information is accumulated within a point card which has been carried by the customer to the store or is accumulated for every customer by sending such information to a store server from the POS terminal. Thereby, the customer can purchase another item using the customer's own accumulated points like currency.

After introducing such a point system, a store manager obtain a benefit of the point system, which is an increase in regular customers and the promotion of sales. Currently, this point system has been adopted in specialty shops of home electric appliances to such a rate as there are no shops or chains which do not yet offer such a point system.

In the existing ordinary point system, a point that is given to a customer is calculated based on an amount of a transaction using a constant, preset ratio for all items. For example, a sales promotion is conducted to uniformly give three times the points of the usual points award under the slogan of "Three Times Sales Points, today!" Even in the case where a customer purchases items using the customer's accumulated points, the points required for such a purchase are uniformly calculated in general for the ordinary point system, for example, through the conversion of one (1)-point = ¥1 for all items, where if the customer has 500 points accumulated, he can purchase items costing up to ¥500 using his accumulated points.

In the existing point system above, because any item does not have additional value from the viewpoint of the purchasing point when considered from the customer side, when a customer purchases an item using cash or using the customer's accumulated points, the criterion for selection of an item ultimately depends on whether a customer actually requires or desires the item. However, the shops have to sell the items having higher profit rates in order to increase their profits, because a profit rate differs for every item. But, in the existing point system, because the point conversion is executed based on the constant rate for all items, even in the case of selling the items using the purchasing, the point system is useful only as a system for getting regular customers. Such a point system cannot attain the object to sell as many of the particular items as possible.

A point system of the related art has calculated a purchasing point, which has been required by a customer to purchase an item using the customer's own remaining points, in the constant ratio for all items. However, a store always desires for customers to purchase as many of the particularly identified items as possible in order to increase the total profit.

Against this background, embodiments of the present invention relate to ways of implementing a data processing system capable of efficiently satisfying this requirement. These implementations involve solutions to technical problems and technical considerations, and provide technical effects. The technical considerations include the file structures described in detail hereinafter (customer master file, item master file, etc) and the data structure of item information.

Additional objects and advantages of the present invention will be set forth in part in the description that follows, and, in part, will be obvious from the description, or may be learned by practice of the present invention.

One aspect of the present invention relates to a point management apparatus for conducting management of point of a customer, in a store, based on a transaction information of a customer generated at a terminal connected to a communication network. The point management apparatus includes item information management means, transaction information receiving means, shopping record management means, shopping contribution rate calculating means, customer information management means, purchasing point discount rate management means, point calculation means, and sales promotion information notifying means. The item information management means manages item information. The transaction information receiving means receives a transaction information of the customer from the terminal. The shopping record management means generates a shopping record based on the transaction information of the customer and stores the shopping record of the customer. The shopping contribution rate calculating means calculates, for every item and every customer, a shopping contribution rate that indicates a rate of contribution to the store with sales amount of the customer for each item based on the shopping record of the customer. The customer information management means manages point information of the customer and a customer information including the shopping contribution rate for every item of the customer. The purchasing point discount rate management means manages a purchasing point discount rate applied to a purchasing point that is usually required at the terminal for the relevant shopping in the case of the point purchasing transaction where the customer purchases the item using the point of the customer based on the customer's shopping contribution rate in regard to the item. The point calculation means calculates a purchasing point required for the shopping in the case of the point purchasing transaction by applying the purchasing point discount rate to the purchasing point which is usually required for the relevant shopping. The sales promotion information notifying means notifies, to the customer, promotion information consisting of the point of customer and the purchasing point of every item of every customer.

A second aspect of the present invention relates to a point management apparatus for conducting management of points of customers based on a transaction information of a customer generated at a terminal connected to a communication network. The point management apparatus includes item information management means, transaction information receiving means, shopping record management means, shopping contribution rate calculation means, customer information management information, purchasing point discount rate management means, point calculation means, and sales promotion information notifying means. The item information management means manages item information. The transaction information receiving means receives the transaction information of a customer from the terminal. The shopping record management means generates a shopping record based on the transaction information of a customer and storing the shopping record of the customer. The shopping contribution rate calculation means calculates, for every item and every customer, a shopping contribution rate that indicates a rate of contribution to the store with a sales amount of the customer for every item based on the shopping record of the customer. The customer information management information reads or writes the stored information via the terminal from or to a customer card for storing the point of customer and the shopping contribution for every item of the customer. The purchasing point discount rate management means manages, at the terminal, a purchasing point discount rate applied to a purchasing point that is usually required for the relevant shopping in the case of the point purchasing transaction where the customer purchases the item using own point based on the shopping contribution rate in regard to the item of the customer. The point calculation means calculates a purchasing point required for the purchasing by applying the purchasing point discount rate for the purchasing point that is usually required for the relevant purchasing in the case of said point purchasing transaction.
The sales promotion information notifying means notifies, to the customer, promotion information consisting of the point of customer and the purchasing point discount rate for every item of every customer.

A third aspect of the present invention relates to a structure that the item information under the management of the item information management means includes a profit rate of the item, the purchasing point discount rate management means conducts management of a purchasing point discount rate based on the shopping contribution rate and the profit rate of item in regard to the item of the customer and the sales promotion information notified with the sales promotion information notifying means includes information of items having the profit rate which is higher than the predetermined value.

In an embodiment of the present invention, a customer is capable of raising a shopping contribution rate for an item by purchasing the same item of which "the purchasing point discount rate may be increased additionally," as indicated by a store. Therefore, the customer can purchase the same item with less amount of points when the customer purchases the same item using the remaining points. As a result, the customer's desire to purchase the same item can be increased. Accordingly, the present invention can effectively increase the profit of a store, a repeat or a regular customer can easily be obtained, and the number of such customers can also be increased.

These and other objects and advantages of the invention will become apparent and more readily appreciated from the following description of the preferred embodiments, taken in conjunction with the accompanying drawings of which:
FIG. 1 is a Total system configuration diagram, according to an embodiment of the present invention;
FIG. 2 is a Configuration diagram of a store server, according to an embodiment of the present invention;
FIG. 3 is a Configuration diagram of a POS terminal, according to an embodiment of the present invention;
FIG. 4 is a diagram of a Customer master file, according to embodiment of the present invention;
FIG. 5 is a diagram of an Item master file, according to an embodiment of the present invention;
FIG. 6 is a diagram of a Purchasing point discount rate for item master file according to an embodiment of the present invention;
FIG. 7 is a diagram of a Shopping contribution rate determination flow when a customer purchases an item according to an embodiment of the present invention;
FIG. 8 is a diagram of a Transaction log file, according to an embodiment of the present invention;
FIG. 9 is a diagram of a Shopping record file, according to an embodiment of the present invention;
FIG. 10 is a diagram of an Item purchasing flow using a point, according to an embodiment of the present invention; and
FIG. 11 is a diagram of Sales promotion information notified to a customer, according to an embodiment of the present invention.

Reference will now be made in detail to the embodiments of the present invention, examples of which are illustrated in the accompanying drawings, wherein like reference numerals refer to like elements throughout.

Embodiments of the present invention will be explained with reference to the accompanying drawings.

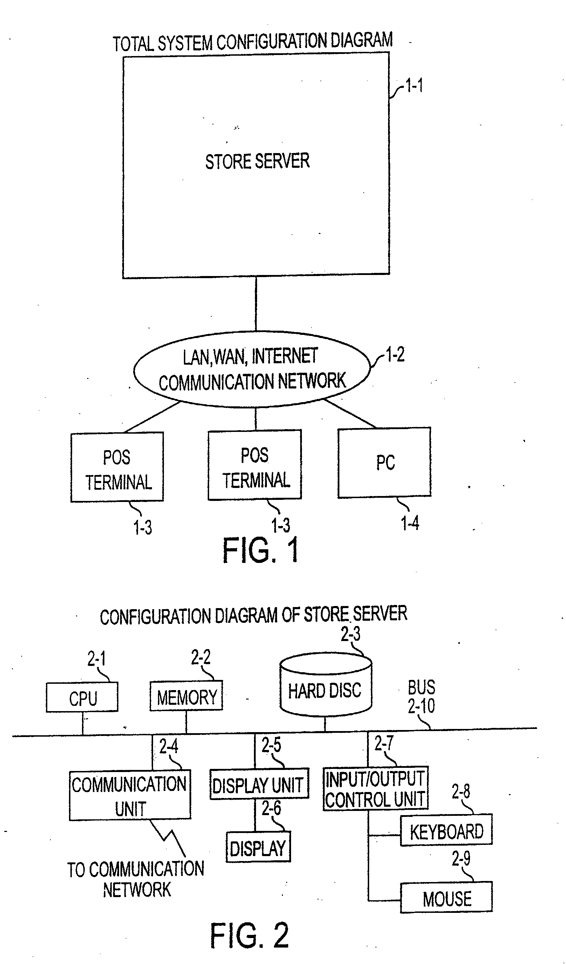

Fig. 1 is a diagram illustrating a total system configuration, according to an embodiment of the present invention. In this embodiment, a system configuration includes a POS terminal (1-3) or a personal computer PC (1-4) that can be connected to the Internet and a store server (1-1) connected via a communication network (1-2) such as LAN, WAN or Internet or the like. Usually, the store server (1-1) and the POS terminal (1-3) are connected via the LAN in the store, while the personal computer PC (1-4) makes access to the store server (1-1) via the Internet communication network. In this embodiment, it is considered as the precondition that a transaction of a customer is mainly conducted through the POS terminal in a store, but such transaction of a customer may be executed via Internet shopping from the PC (1-4). In an embodiment, multiple POS terminals are connected to communication network 1-2 (illustrated in FIG. 1 using multiple POS terminals 1-3).

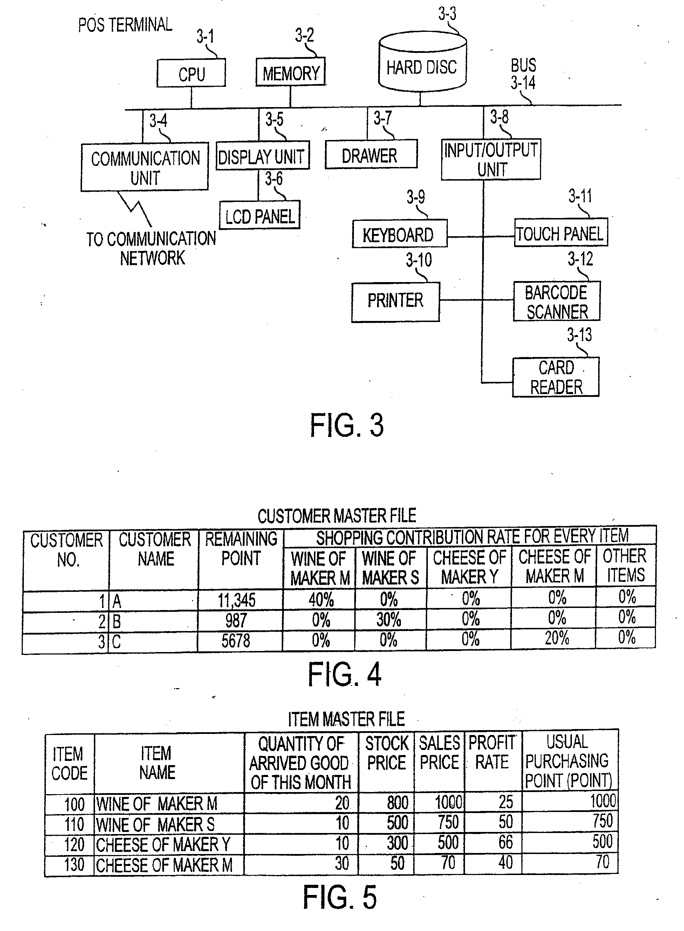

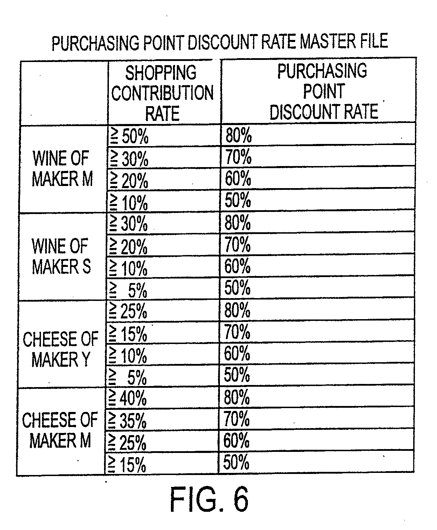

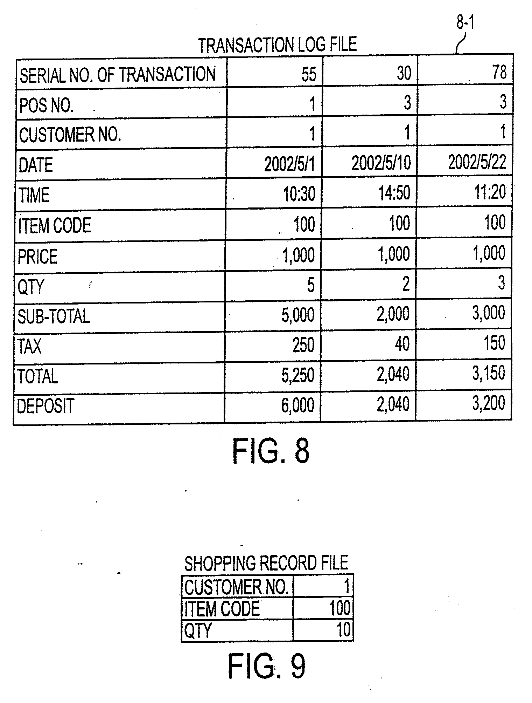

Fig. 2 is a diagram illustrating a block configuration of a store server (1-1). The store server is composed of a CPU (2-1), a memory (2-2), a hard disc (2-3), a communication unit (2-4) for communication with a communication network, a display unit (2-5), a display (2-6), an input/output control unit (2-7), a keyboard (2-8), a mouse (2-9), and a bus (2-10) connecting these elements. The hard disc stores, as the programs, an item information management unit, a transaction information receiving unit, a shopping record management unit, a shopping contribution rate calculation unit, a customer information management unit, a purchasing point discount rate management unit, a point calculation unit and a sales promotion information notifying unit, and these programs are loaded to the memory (2-2) and sequentially read by the CPU (2-1) for execution. The hard disc (2-3) moreover stores a database consisting of a customer master file illustrated in Fig. 4, an item master file illustrated in Fig. 5, a purchasing point discount rate master file of each item illustrated in Fig. 6, a transaction log file illustrated in Fig. 8, and a shopping record file illustrated in Fig. 9.

Fig. 3 is a diagram illustrating a block configuration of a POS terminal (1-3). The POS terminal is composed of a CPU (3-1), a memory (3-2), a hard disc (3-3), a communication unit (3-4) for communication with a communication network, a display unit (3-5), an LCD panel (3-6), a drawer (3-7), an input/output unit (3-8), a keyboard (3-9), a printer (3-10), a touch panel (3-11), a barcode scanner (3-12), a card reader (3-13), and a bus (3-14) for connecting these elements.

Next, Fig. 4 to Fig. 8 will be explained. These files are closely related with each other and the core portions of the present invention.

Fig. 4 is a customer master file in which the remaining points and shopping contribution rates for every item of the customers A, B, C are stored respectively. A shopping contribution rate is calculated, in the present invention, for every item of every customer and means a rate of the number of purchased items of a certain customer for the number of inputted items during a month of a certain store. In short, the shopping contribution rate is a rate of contribution for the amount of sales of a store through the shopping of a certain item by a customer. However, the shopping contribution rate is calculated through analysis of customers and the definition explained above is only an example thereof. When such shopping contribution rate is calculated using the other well known method of analysis of customers, such definition may also be different.

Fig. 5 is an item master file in which item codes, item names, number of inputted items of this month, input prices, profit rates and usual purchasing points for the wine of maker M, wine of maker S, cheese of maker Y and cheese of maker M are respectively stored. A purchasing point means the point required when a customer purchases a certain item using the customer's own points (namely, the points may be exchanged with a part or the entire part of the purchase price of the item without using cash, and such exchange is expressed as "purchasing"). Usually, a purchasing point means an ordinary point before a purchasing point discount rate, which will be explained later, is applied. In this embodiment, as will be understood from Fig. 5, the conversion of selling price = usual purchasing point, namely ¥1 = one point, is set as the fixed conversion rate as a program in the item information management unit of a store master file. For example, in Fig. 5, the sales price of wine of maker M is ¥1000 and therefore the usual purchasing point is 1000 points.

Fig. 6 illustrates a purchasing point discount rate master file for every item. Namely, a purchasing point discount rate depending on the shopping contribution rate for every item is stored in this master file. A purchasing point discount rate means a discount rate to be usually applied to a purchasing point and this purchasing point discount rate is set for every item in a store depending on the shopping contribution rate. The purchasing point discount rate for every item is referred by a customer when the customer tries to obtain, when purchasing an item using the customer's own points, a purchasing point discount rate to be applied to the usual purchasing point of the relevant item of Fig. 5 for the relevant purchase from the shopping contribution rate by referring to the shopping contribution rate of the relevant item of the relevant customer in the customer master file of Fig. 4.

A store desires to improve, for the customer who has purchased more of a certain item than the other customers, the desire of that customer to purchase the item by applying the higher purchasing point discount rate to the item. As explained previously, the shopping contribution rate is relatively calculated in comparison with the number of purchased items of the other customers, and the purchasing point discount rate is derived from the shopping contribution rate. Therefore, such values are changing for the customers. Accordingly, even when a purchasing point discount rate of the customer A for the wine of maker M is 80% in a certain timing, if the customer B has purchased more of the wine of maker M than customer A, a purchasing point discount rate of the customer B for the wine of maker M may exceed the rate of the customer A.

It is natural that the store desires to sell a large amount of items having a higher profit rate, in order to increase the total profit of the store. Therefore, the store tries to sell, for example, more of the wine of maker S having the profit rate of 50% and the cheese of maker Y having the profit rate of 60%, in regard to the item master file of Fig. 5 (S and Y not illustrated in FIG. 5). Therefore, in the present embodiment, a store sets the purchasing point discount rate for every shopping contribution rate to change depending on the profit rate for each item. This setting process is executed a purchasing point discount rate management unit of the store server. In comparison of wine of maker M with cheese of maker Y, the wine of maker M has the profit rate of 25%, while the cheese of maker Y has the profit rate of 60%. Therefore, referring to FIG. 6, the cheese of maker Y having a larger profit rate is set, for example (using the numbers in FIG. 6), so that the purchasing point discount rate is 80% when the shopping contribution rate is 25% or higher, while the wine of maker M having the profit rate that is considerably smaller than that of the cheese of maker Y is set so that the purchasing point discount rate can reach 80% when the shopping contribution rate is 50% or higher. Therefore, an item having a higher profit rate can easily provide a higher purchasing point discount rate.

Here, a flow of purchasing point calculation will be explained with reference to an example. First, it is known from the customer master file of Fig. 4 that the shopping contribution rate for the wine of maker M of the customer A is 40% and it is also known from the purchasing point discount rate master file illustrated in Fig. 6 that the purchasing point discount rate of 70% is applied to a customer of which shopping contribution rate for the wine of maker M is 40%. The purchasing point for purchasing the wine of maker M using the point becomes 300 points by applying the discount rate of 70% to the usual purchasing point of 1000 points for the wine of maker M indicated in the item master file of Fig. 5.

Next, the change of the shopping contribution rate by the purchase of an item by the customer A will be explained below.

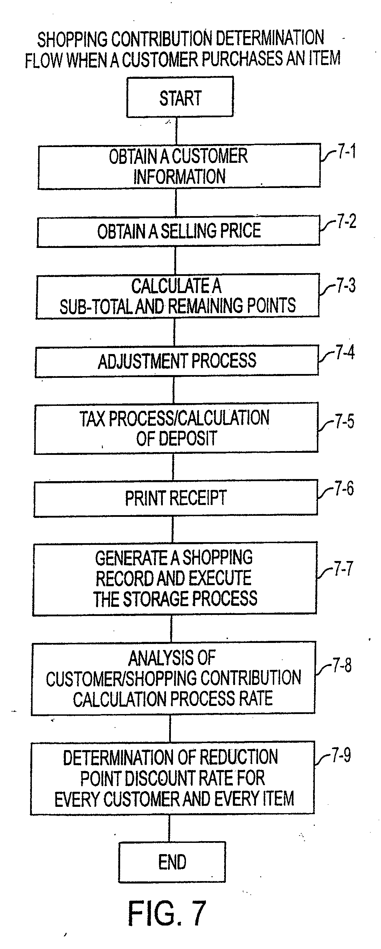

Referring now to FIG. 7, when customerA presents his customer card to a store clerk for purchasing an item through the POS terminal, the store clerk reads the information stored in the customer card with a card reader connected to the POS terminal and obtains details of the present customer information of customer A based on such information to the memory (3-2) of the POS terminal from the customer master file (Fig. 4) of the store server (7-1). According to the customer master file of Fig. 4, the present remaining point of the customer A is 11,345 points, the shopping contribution rate for the wine of maker M is 40%, the shopping contribution rate for the wine of maker S is 0%, the shopping contribution rate for the cheese of maker Y is 0%, the shopping contribution rate for the cheese of maker M is 0%, and the shopping contribution rate for the other items is also 0%.

Next, when the customer M has selected three wines of maker M for this purchase, a store clerk reads the item code of the relevant item with manipulation for reading the barcode with a barcode scanner (3-12) and obtains the selling price of wine of maker M (¥1000) by looking up the relevant item code to the item master file of the store server (7-2). Since customer A desires three wines, this information is inputted with the key for multiplication, e.g., '^{*},' or the like, not illustrated, on the POS terminal and thereafter a sub-total of this transaction becomes ¥3000 when the sub-total key (not illustrated on the POS terminal) is depressed. Here, the 3000 points are added to the remaining 11,345 points of the customer A and the remaining point of the customer A on the customer master file is updated to 14,345 points with the item information management unit of the store server (in this embodiment, it is set as the fixed data on the program that one point is converted to ¥1 when the point is obtained) (7-3). Thereafter, the payment is executed through the adjustment process (7-4) and tax calculation and deposit amount calculation for deposit (7-5). A receipt on which the contents of this transaction is printed is outputted (7-6) from a printer of the POS terminal (3-10). Thereby, this transaction is completed.

When transaction is completed, the CPU (2-1) of store server executes the transaction information receiving unit on the memory (2-1). Accordingly, the relevant transaction data is stored in the transaction log file illustrated in Fig. 8 stored in the hard disc (2-3) of the store server. This transaction log file indicates, as an example, a record of transactions during a month of May, 2002. In May, the customer A has come to the store three times for shopping and the transaction executed here corresponds to the transaction of May 22, 2002 indicated by 8-1 of Fig. 8.

Thereafter, a shopping record data is generated based on the relevant transaction data with the shopping record management unit of store server and it is then stored (7-7) in the shopping record file illustrated in Fig. 9 in the hard disc (2-3). In this embodiment, the shopping records of customers during a month are collected. This shopping record file collects the shopping records of the customer A during a month of May, 2002. The customer No. 1 of the customer A, item code 100 of the wine of maker M which is purchased by the customer A and the total number 10 of purchased wines of maker M of the customer A during a month of May, 2002 are stored in the shopping record file. Here, the customer number is indicated in the customer master file of Fig. 4 and the item code is indicated in the item master file of Fig. 5.

In addition, the store server executes the customer analysis and shopping contribution rate calculation process (7-8). In general, a customer analysis method includes, for example, a basket analysis, RFM (Recency, Frequency, Monetary) analysis, CRM (Customer Relationship Management) analysis or the like, but in this embodiment, an analysis method is employed for obtaining the shopping contribution rate. Namely a rate of the number of purchased items of a certain customer to the number of inputs of the same item of a certain month (May of 2002, in this embodiment) of such customer is calculated. This analysis is executed with the shopping contribution rate calculation unit of the store server and a result of analysis is stored in the customer master file of Fig. 4. As illustrated in Fig. 9, customer A has purchased in the relevant store the 10 wines of maker M in total during a month of May, 2002. Moreover, according to the item master file of Fig. 5, the number of inputs of the wine of maker M of the relevant month is 20 bottles in total. Therefore, the shopping contribution rate of customer A for the wine of maker M in the relevant store can be obtained as 10/20 x 100 = 50%. Based on this result, the shopping contribution rate of customer A for the wine of maker M on the customer master file is updated to 50% from 40% with the customer information management unit of the store server. This shopping contribution rate is varied from time to time depending on the number of purchased wines of maker M of the other customers who also often purchase the wine of maker M. Therefore, at present, the shopping contribution rate of customer A for the wine of maker M is 50% but this value will also be changed tomorrow to a different value.

Explained above is a determination flow of the shopping contribution rate for every item of every customer in the purchasing of the items.

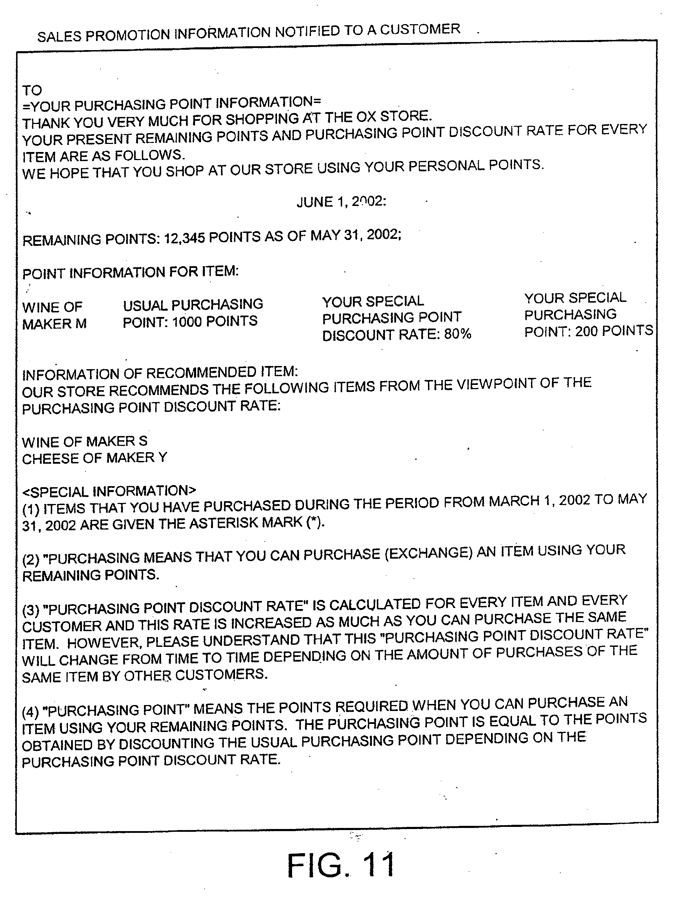

Thereafter, the sales promotion information notifying unit of the store server extracts, from the customer master file, a customer information such as the present remaining point and a purchasing point discount rate for every item of the customer and also extracts, from the item master file, an item of which the present profit rate is 50% or higher, and then sends such information to the customerA with a direct mail or with a means such as E-mail via the communication unit (2-4) and the Internet communication network (1-2). Thereby, customer A is capable of detecting, by obtaining the sales promotion information as illustrated in Fig. 11, that the present remaining point is 12,345 points, customer A often bought the wine of maker M during a month of May, 2002, the present purchasing point for this item is 80% and that the purchasing point for the purchasing of the wine of maker M is usually 1000 points but the present purchasing point is 200 points through a discount of 80%. Moreover, the store also notifies, to the customer A, that an information of the items of which a purchasing point discount rate can easily be raised for the purpose of sales promotion. Accordingly, it is probable that the customer A may have an interest, for example, in the wine of maker S and may purchase this wine at the store. Therefore, the store is capable of leading a customer to purchase the items having higher profit rates in order to increase profits.

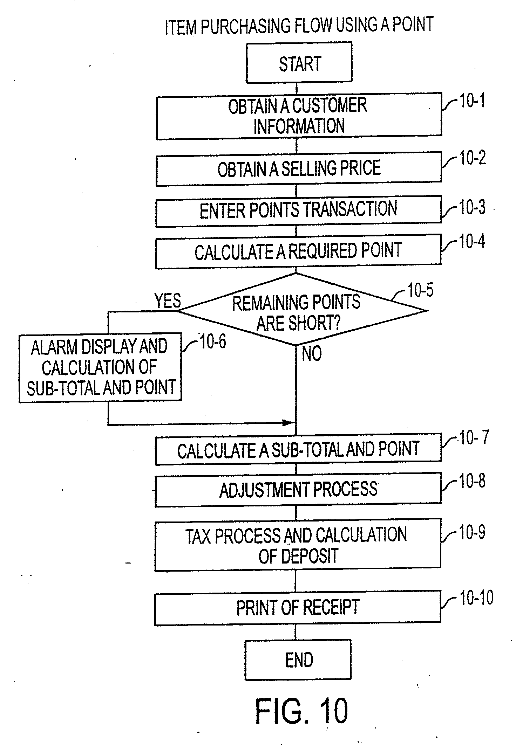

Next, the process of purchasing transaction in the case where the customer A comes to the store to purchase an item using the points after having obtained the sales promotion information of Fig. 11 will be explained with reference to Fig. 10.

First, a store clerk obtains the customer information of customer A like the transaction executed in the flow of Fig. (10-1). As a result of the transaction executed in the flow of Fig. 7, the customer information of customer A is updated. Thereby, the remaining points of customer A becomes 12,345 points, the shopping contribution rate for the wine of maker M is 50%, and the other information pieces are not updated. The store clerk obtains a selling price of the wine of maker M (10-2). Thereafter, when customer A tells to the store clerk that the customer A desires to purchase the wine of maker M using the remaining points, the store clerk inputs, with the predetermined manipulation, on the POS terminal that the payment is executed with the points in place of cash (10-3). Next, the point calculation unit of the store server calculates the purchasing point required by customer A for the shopping of the wine of maker M (10-4). First, it can be detected that the present shopping contribution rate for the wine of maker M is 50% and the purchasing point discount rate to be applied to the customer having the shopping contribution rate of 50% for the wine of maker M is 80% according to the purchasing point discount rate master file for every item of the store server. Next, according to the item master file of the store server, since the usual purchasing point of the wine for maker M is 1000 points, the purchasing point of customer A can be calculated as 1000 points x 0.8 (purchasing point discount rate) = 200 points. When the purchasing point is calculated, customer A's present remaining points are checked to determine whether they are larger than 200 points or not (10-5). Because customer A has 12,345 remaining points, which is larger than 200 points, the remaining points are not short, and a sub-total becomes ¥0 by the sub-total and point calculation (10-7) (namely, payment by cash in this transaction is ¥0), the updated remaining point of customer A becomes 12,145 points (12,345 - 200) and the remaining points can be updated to the new remaining points on the customer master file with the customer information management unit of the store server. If the present remaining point of the customer A is checked as under 200 points (10-5), it is displayed as an alarm and the sub-total becomes ¥1000 (payment should be executed by cash). Here, 1000 points are added to the remaining point and the remaining point is updated to the new remaining point on the customer master file with the customer information management unit of the store server (10-6). Thereafter, because the subsequent adjustment process (10-8, tax process and deposit calculation (10-9), and printing of receipt (10-10) are executed in the same manner as the process in the flow of Fig. 7, the same explanation is omitted here.

As shown in FIG. 11, in an embodiment, a sales promotion is notified to a customer. Specifically, a message addressed to a customer thanks the customer for shopping at the store and relays the customer's present remaining points and purchasing point discount rate for every item. For a specific day, for example, June 1, 2002, the remaining points, e.g., 12,345, as of a particular day, e.g., May 31, 2002 are listed. The point information for an item is also listed, e.g., information for wine of maker M, which has a usual purchasing point of 1000 points. In the example shown, the customer's special purchasing point discount rate is 80% and the customer's special purchasing point is 200 points. Information of recommended items is also relayed to the customer, e.g., wine of maker S and cheese of maker Y, along with special information, e.g., items 1 through 4 as shown.

In this embodiment, a transaction of a customer at the POS terminal installed in a store has been explained as an example, but the present invention is not limited thereto. For example, the present invention can also be applied to a selling profile such as the Internet shopping or the like.

Moreover, it can also be thought that a customer master file of store server used in this embodiment does not exist, the customer information indicated in this embodiment is all stored in a customer card which is carried by the customer and the customer information is read or written completely to or from the relevant card.

The present invention is implemented using electronic data processing elements. These elements may include memory, processors, and/or Application Specific Integrated Circuits ("ASICs"). Such memory may include a machine-readable medium on which is stored a set of instructions (i.e., software) embodying any one, or all, of the methodologies described herein. Software can reside, completely or at least partially, within this memory and/or within the processor and/or ASICs. For the purposes of this specification, the term "machine-readable medium" includes any mechanism that provides (i.e., stores and/or transmits) information in a form readable by a machine (e.g., a computer). For example, a machine-readable medium includes read only memory ("ROM"), random access memory ("RAM"), magnetic disk storage media, optical storage media, flash memory devices, electrical, optical, acoustical, or other form of propagated signals (e.g., carrier waves, infrared signals, digital signals, etc.), etc.

One embodiment of the present invention can provide a method for encouraging a customer to purchase more of a particular item from a store, comprising: calculating a shopping contribution rate for an item and a customer; determining a preset purchase point discount rate based on the shopping contribution rate; and reducing required purchase points for the customer to purchase the item, by the preset purchase point discount rate, when the customer desires to purchase the item using the customer's accumulated purchase points, or adding the required purchase points to the customer's accumulated purchase points, when the customer purchases the item other than with the customer's accumulated purchase points.

The method preferably comprises: storing a plurality of relationships between a plurality of preset purchase point discount rates and a plurality of shopping contribution rates.

The shopping contribution rate is preferably based upon the customer's prior purchases of the item.

An embodiment of the present invention can provide a point system that can urge customers to purchase the items having higher profit rates.

Although a few embodiments of the present invention have been shown and described, it will be appreciated by those skilled in the art that changes may be made in these embodiments without departing from the principles and spirit of the invention, the scope of which is defined in the appended claims and their equivalents.

## Claims

1. A point management apparatus for conducting management of a point of a customer, in a store, based on a transaction information of said customer generated at a terminal connected to a communication network, comprising:
item information management means for management of item information;
transaction information receiving means for receiving transaction information of said customer from said terminal;
shopping record management means for generating a shopping record based on said transaction information of said customer and storing said shopping record of said customer;
shopping contribution rate calculating means for calculating, for every item and every customer, a shopping contribution rate that indicates a rate of contribution to said store with sales amount of said customer for every item based on said shopping record of said customer;
customer information management means for management of said point information of said customer and said customer information including said shopping contribution rate for every item of said customer;
purchasing point discount rate management means for conducting management of a purchasing point discount rate applied to said purchasing point that is required for a usual point purchasing transaction where said customer purchases said item using said point of said customer, based on said customer's shopping contribution rate in regard to said item;
point calculation means for calculating said purchasing point required for said point purchasing transaction by applying said purchasing point discount rate to said purchasing point which is required for a usual point purchasing transaction; and
sales promotion information notifying means for notifying, to said customer, promotion information consisting of said point of said customer and said purchasing point of said every item of every customer.

2. A point management system for conducting management of a point of a customer based on transaction information of said customer consisting of a point management apparatus comprising:
a terminal connected to a communication network;
item information management means for management of item information;
transaction information receiving means for receiving transaction information of said customer from said terminal;
shopping record management means for generating a shopping record based on said transaction information of said customer and storing said shopping record of said customer;
shopping contribution rate calculation means for calculating, for every item of every customer, a shopping contribution rate indicating a rate of contribution to said store with sales amount of said customer for every item based on said shopping record of said customer;
customer information management means for management of said point of said customer and said customer information including said shopping contribution rate of every item of every customer;
purchasing point discount rate management means for conducting management of a purchasing point discount rate applied to a purchasing point that is required for a usual point purchasing transaction where said customer purchases said item using said point of said customer, based on said shopping contribution rate of said customer in regard to said item;
point calculation means for calculating a purchasing point required for said point purchasing transaction by applying said purchasing point discount rate to the purchasing point which is required for a usual point purchasing transaction; and
sales promotion information notifying means for notifying, to said customer, sales promotion information consisting of said point of said customer and said purchasing point of said every item of said customer.

3. A point management apparatus for conducting management of a point of a customer, in a store, based on transaction information of said customer generated at a terminal connected to a communication network, comprising:
item information management means for management of item information;
transaction information receiving means for receiving said transaction information of said customer from said terminal;
shopping record management means for generating a shopping record based on said transaction information of said customer and storing said shopping record of said customer;
shopping contribution rate calculation means for calculating, for every item and every customer, a shopping contribution rate that indicates a rate of contribution to said store with a sales amount of said customer for every item based on said shopping record of said customer;
customer information management information means for reading or writing said stored information via said terminal from or to said customer card for storing said customer's point and said shopping contribution rate for every item of said customer;
purchasing point discount rate management means for conducting management, at said terminal, of a purchasing point discount rate applied to a purchasing point which is required for a usual point purchasing transaction where said customer purchases said item using the customer's own point, based on said shopping contribution rate in regard to said item of said customer;
point calculation means for calculating a purchasing point required for said purchasing by applying said purchasing point discount rate for the purchasing point which is required for a usual point purchasing transaction; and
sales promotion information notifying means for notifying, to said customer, sales promotion information consisting of said point of said customer and said purchasing point discount rate for every item of every customer.

4. A point management system for conducting management of said point of a customer based on transaction information of said customer consisting of a point management apparatus, comprising:
a terminal connected to a communication network;
item information management means for conducting management of item information;
transaction information receiving means for receiving transaction information of said customer from said terminal;
shopping record management means for generating a shopping record based on transaction information of said customer and storing said shopping record of said customer;
shopping contribution calculation means for calculating, for every item of every customer, a shopping contribution rate that indicates a rate of contribution to said store with a sales amount of said customer of every item based on said shopping record of said customer;
customer information management means for reading or writing, via said terminal, said stored information to or from said customer card storing said customer's point and said shopping contribution rate for said every item of every customer;
purchasing point discount rate management means for conducting management, at a terminal, of a purchasing point discount rate applied to a purchasing point that is required for a usual point purchasing transaction where said customer purchases said item using the customer's point, based on said shopping contribution rate for said item of said customer;
point calculation means for calculating a purchasing point required for said shopping by applying said purchasing point discount rate to a purchasing point that is required for a point purchasing transaction; and
sales promotion information notifying means for notifying, to said customer, sales promotion information consisting of said point of said customer and said purchasing point discount rate of every item of every customer.

5. A point management method for conducting management of point of a customer based on transaction information of said customer, comprising:
calculating a shopping contribution rate, for every customer, that indicates a rate of contribution with a sales amount of said customer for a particular items based on a shopping record of said customer;
setting a purchasing point discount rate, based on said shopping contribution rate for said item of said customer, applied to a purchasing point which is required for a usual point purchasing transaction where said customer purchases said item using the customer's point;
calculating a purchasing point required for said shopping by applying said purchasing point discount rate to a purchasing point which is required for a usual point purchasing transaction; and
notifying a sales promotion information consisting of said customer's point and said purchasing point for every item of said customer.

6. A point management apparatus for conducting management of a point of a customer based on transaction information of said customer, comprising:
shopping contribution rate calculation means for calculating, based on a shopping record of said customer, a shopping contribution rate that indicates a rate of contribution with a sales amount of said customer for particular items for every customer;
purchasing point discount rate management means for conducting management of a purchasing point discount rate applied to a purchasing point that is required for a usual point purchasing transaction where said customer purchases said item using the customer's point, based on said shopping contribution rate in regard to said item of said customer;
point calculation means for calculating a purchasing point required for said shopping by applying said purchasing point discount rate to a purchasing point which is required for a usual point purchasing transaction; and
sales promotion information notifying means for notifying, to said customer, sales promotion information consisting of said point of said customer and said purchasing point for every item of said customer.

7. A point management apparatus according to claim 1, wherein said item information under the management of said item information management means includes a profit rate of said item, said purchasing point discount rate management means conducts management of a purchasing point discount rate based on said shopping contribution rate and said profit rate of item in regard to said item of said customer and said sales promotion information notified with said sales promotion information notifying means includes information of items having said profit rate that is higher than the predetermined value.

8. A point management system according to claim 2, wherein said item information under the management of said item information management means includes a profit rate of said item, said purchasing point discount rate management means conducts management of a purchasing point discount rate based on said shopping contribution rate and said profit rate of item in regard to said item of said customer and said sales promotion information notified with said sales promotion information notifying means includes information of items having said profit rate that is higher than the predetermined value.

9. A point management method according to claim 5, wherein said purchasing point discount rate is calculated on the basis of said shopping contribution rate to said item of said customer and said profit rate of item and said sales promotion information includes information of items having said profit rate that is higher than the predetermined value.

10. A point management program that can operate a computer connected to a terminal with a communication network to drive:
point management means for management of point of a customer based on transaction information of said customer;
item information management means for conducting management of item information;
transaction information receiving means for receiving transaction information of said customer from said terminal;
shopping record management means for generating a shopping record based on said transaction information of said customer and storing said shopping record of said customer;
shopping contribution rate calculation means for calculating a shopping contribution rate that indicates a rate of contribution to a store with a sales amount of said customer for every item of every customer based on said shopping record of said customer;
customer information management means for conducting management of said customer information including said point of said customer and said shopping contribution rate for said every item of said customer;
purchasing point discount rate management means for conducting management of purchasing point discount rate applied to a purchasing point which is usually required for the relevant shopping in the case of the point purchasing transaction where said customer purchases said item using said own point, based on said shopping contribution rate in regard to said item of said customer;
point calculation means for calculating, for said point purchasing transaction, a purchasing point required for said shopping by applying said purchasing point discount rate to a purchasing point that is required for a usual purchasing point transaction; and
sales promotion information notifying means for notifying, to said customer, sales amount information consisting of said point of said customer and said purchasing point of every item of said customer.

11. A point management program that can operate a computer connected to a terminal with a communication network to drive:
point management means for management of point of a customer based on transaction information of the customer;
item information management means for conducting management of item information;
transaction information receiving means for receiving transaction information of said customer from the terminal;
customer information management means for reading or writing, via the terminal, the stored information to or from a customer card storing said customer's point and the shopping contribution rate for every item of every customer;
shopping contribution rate calculation means for calculating a shopping contribution rate that indicates a rate of contribution to a store with a sales amount of said customer for every item of every customer based on the shopping record of said customer;
customer information management means for conducting management of customer information including the point of said customer and the shopping contribution rate for every item of said customer;
purchasing point discount rate management means for conducting management of purchasing point discount rate applied to a purchasing point that is required for a usual point purchasing transaction where said customer purchases the item using the customer's point based on the shopping contribution rate in regard to the item of said customer;
point calculation means for calculating, for the point purchasing transaction, a purchasing point required for the shopping by applying the purchasing point discount rate to a purchasing point that is required for a usual point purchasing transaction; and
sales promotion information notifying means for notifying, to said customer, a sales amount information consisting of the point of said customer and the purchasing point of every item of said customer.

12. A point management program according to claim 10, wherein the item information under the management of the item information management means includes a profit rate of the item, the purchasing point discount rate management means executes management of the purchasing point discount rate based on the shopping contribution rate of the item of said customer and the profit rate of the item and the sales promotion information to be notified by the sales information notifying means includes information of item having the profit rate that is higher than the predetermined value.

13. A point management apparatus according to claim 7, wherein a higher purchasing point discount rate is stored, in the purchasing point discount rate storage means, for the item having a higher profit rate even with the same shopping contribution rate.

14. A point management system according to claim 8, wherein a higher purchasing point discount rate is stored, in the purchasing point discount rate storage means, for the item having a higher profit rate even with the same shopping contribution rate.

15. A point management method according to claim 9, wherein a higher purchasing point discount rate is set for the item having a higher profit rate even with the same shopping contribution rate.

16. A point management program according to claim 12, wherein a higher purchasing point discount rate is stored, in the purchasing point discount rate storage means, for the item having a higher profit rate even with the same shopping contribution rate.

17. A point management apparatus according to claim 7, wherein the shopping contribution rate calculation means calculates the shopping contribution rate as a rate of the number of items purchased by said customer within a constant period to the number of inputs of the item in said store within the constant period.

18. A point management system according to claim 8, wherein the shopping contribution rate calculation means calculates the shopping contribution rate as a rate of the number of items purchased by a customer within a constant period to the number of inputs of the item in said store within the constant period.

19. A point management method according to claim 9, wherein the shopping contribution rate is calculated as a rate of the number of items purchased by said customer within a constant period to the number of inputs of the item in said store within the constant period.

20. A point management program according to claim 12, wherein the shopping contribution rate calculation means the shopping contribution rate as a rate of the number of items purchased by a customer within a constant period to the number of inputs of the item in said store within the constant period.

21. A point management apparatus according to claim 3, wherein said item information under the management of said item information management means includes a profit rate of said item, said purchasing point discount rate management means conducts management of a purchasing point discount rate based on said shopping contribution rate and said profit rate of item in regard to said item of said customer and said sales promotion information notified with said sales promotion information notifying means includes information of items having said profit rate that is higher than the predetermined value.

22. A point management system according to claim 4, wherein said item information under the management of said item information management means includes a profit rate of said item, said purchasing point discount rate management means conducts management of a purchasing point discount rate based on said shopping contribution rate and said profit rate of item in regard to said item of said customer and said sales promotion information notified with said sales promotion information notifying means includes information of items having said profit rate that is higher than the predetermined value.

23. A point management program according to claim 11, wherein the item information under the management of the item information management means includes a profit rate of the item, the purchasing point discount rate management means executes management of the purchasing point discount rate based on the shopping contribution rate of the item of said customer and the profit rate of the item and the sales promotion information to be notified by the sales information notifying means includes information of item having the profit rate that is higher than the predetermined value.

24. An apparatus for encouraging a customer to purchase more of a particular item from a store, comprising:
a calculating unit to calculate a shopping contribution rate for an item and a customer;
a determining unit to determine a preset purchase point discount rate based on the shopping contribution rate; and
an adjusting unit to reduce required purchase points for the customer to purchase the item, by the preset purchase point discount rate, when the customer desires to purchase the item using the customer's accumulated purchase points, or to add the required purchase points to the customer's accumulated purchase points, when the customer purchases the item other than with the customer's accumulated purchase points.

25. The apparatus of claim 24, further comprising:
a storing unit to store a plurality of relationships between a plurality of preset purchase point discount rates and a plurality of shopping contribution rates.

26. The apparatus of claim 24 or 25, wherein the shopping contribution rate is based upon the customer's prior purchases of the item.
